# EUROPEAN PATENT APPLICATION

(11) **EP 1 914 291 A2**
(43) Date of publication of application: **23.04.2008**
(21) Application number: 07253983.6
(22) Date of filing: 09.10.2007
(51) Int. Cl.: C10L 1/02, C10L 1/06, C10L 1/16, C10L 1/18, F02B 47/00, C10L 10/14

(54) **Volatility agents as fuel additives for ethanol-containing fuels**

(30) Priority: 16.10.2006 US 549799
(71) Applicant: Afton Chemical Corporation, Richmond, VA 23219 (US)
(72) Inventor: Cunningham, Lawrence J., Mechanicsville, VA 23116 (US); Dumont, Richard J., Richmond, VA 23225 (US); Colucci, William J., Glen Allen, VA 23060 (US); Kulinowski, Alexander M., Mechanicsville, VA 23116 (US); Roos, Joseph W., Mechanicsville, VA 23116 (US); Fricke, Ronald K., Richmond, VA 23233 (US)
(74) Representative: Hayes, Adrian Chetwynd

(57) **Abstract**

The present disclosure provides a fuel composition containing gasoline, ethanol and a volatility agent, such that the cold start performance of the gasoline/ethanol blend fuel is enhanced. Also provided is a fuel composition containing ethanol and a volatility agent and also a method for improving the cold start performance of an engine.

## Description

The present disclosure relates to the use of fuel additives in fuels containing alcohols such as ethanol, propanol and butanol. The additives improve the properties of the resulting fuel and also enhance the benefits to the consumer and to the environment of utilizing varying amounts of alcohol as, or in, a fuel in combustion engines. In particular, provided herein are fuel compositions containing ethanol and at least one volatility agent useful in improving the volatility and cold start performance of the fuel.

Much has been said about the use of ethanol as a fuel by itself, and also as a blend component for use with gasoline, and even with diesel fuels. Ethanol can be produced from crops and thus provides a viable renewable fuel source.

A common blend of gasoline and ethanol being discussed is 15 % gasoline and 85 % ethanol, often commonly referred to as "E85" fuel (hereinafter "E85"). Other ethanol fuels can comprise, for example 10% ethanol (E10) and 100% ethanol (E100).

The use of ethanol alone or in gasoline blends can create new problems for fuel equipment designed to handle the more non-polar hydrocarbonaceous petroleum fractions commonly known as gasolines. The polarity, corrosivity, adhesiveness, friction properties, and perhaps conductivity of ethanol or ethanol-containing fuel can create new problems and new needs in the fuel industry.

E85, gasoline, and diesel fuel are seasonally adjusted to ensure proper starting and performance in different geographic locations. For example, E85 sold during colder months often contain only 70% ethanol and then 30% hydrocarbons to produce the necessary vapor pressure for starting in cold temperatures. During warmer months the hydrocarbon content for E85 can often be, for example, 17% to about 20%. However, as the interest increases to other fuel blends and to possibly wider use of higher concentrations of ethanol such as, E100, the need for better cold start performance and reliability will increase.

Commercial ethanol is widely treated with additives designed to prevent human consumption. Such treated ethanol is called denatured alcohol, or denatured ethanol and common denaturants include gasoline, natural gasoline, gasoline components, and kerosene. Other denaturants for rendering fuel alcohol unfit for beverage use are defined in 27 CFR 21.24.

The use of varying degrees of ethanol, higher alcohols, or mixtures thereof in gasoline fuels can create problems with, for example, increased engine deposits, fuel stability, corrosion, fuel economy, fuel volatility, luminosity, fuel economy, demulse, ignition, volatility, driveability, antioxidancy, oil drain interval, achieving CARB standards, achieving Top-Tier auto-maker standards, achieving US EPA standards, solubility, component compatibility, fuel line plugging, engine durability, engine wear, and injector fouling, which will benefit from the inclusion in the fuel of certain fuel additives.

As currently offered to consumers by several automakers, flexible fuel vehicles (FFVs) are designed to operate on any mixture of hydocarbon and ethanol - with ethanol concentrations of up to 85% by volume (E85). There is one major difference between an FFV and a conventional gasoline-fueled vehicle - the FFV detects the ethanol/gasoline ratio and makes appropriate adjustments to the engine's ignition timing and air/fuel mixture ratios to account for the ethanol and optimize performance and maintain emissions control. The vehicle must be equipped with an air/fuel ratio map capable of handling the adjustments necessary for optimized performance on both gasoline and E85. Components of the fuel delivery systems on FFVs are also modified and upgraded to be resistant to the corrosive effects of alcohol in the fuel.

The properties of E85 are governed by ASTM specifications which were issued in 1999 and may be considered somewhat dated. For instance, they clearly do not reflect the EPA Tier 2/Gasoline Sulfur regulations which require refiners to meet a 30 ppm average gasoline sulfur limit starting in 2006. The ASTM specification for E85 allows for up to 300 ppm sulfur in the mixture. This high level could degrade the performance of catalytic converters that must be on the FFV to meet emission standards.

Pure ethanol, propanol and butanol differ from conventional gasoline in that it has a constant boiling point temperature, higher octane, lower energy density, and requires more heat for vaporization. Blends containing 85% ethanol by volume have a higher octane value than regular gasoline, but because of the lower energy density of ethanol, an E85 blend contains only about 69 - 74% of the energy of regular gasoline on a Btu/gallon basis. This means that a 35% increase in the capacity of the fuel handling infrastructure (delivery tanks and carriers) would be needed for E85 systems to enable the same level of mobility (total vehicle miles of travel) as that provided by the current gasoline distribution system.

Neither the ASTM standards nor EPA regulations currently require deposit control additives to protect the intake valves and fuel injectors of vehicles operated on E85. The engines on FFVs operate like those on gasoline vehicles, but there is little published information available on their deposit formation tendencies. Evaluations of the need for deposit control additives in E85 (and their effectiveness) have not been completed.

Much like gasoline, the volatility of E85 must be adjusted seasonally and by geographic region to assure adequate cold start and drive away performance. This is done by increasing the amount of gasoline (typically from 15% to 30% by volume) in blends sold during colder months.

Pure ethanol has broader flammability limits than gasoline and burns with lower flame luminosity. When blended with hydrocarbon fuels, the vapor space flammability limits of ethanol approach those of gasoline and luminosity is increased.

With a stoichiometric air-to-fuel ratio of 10 (compared to 14.7 for regular gasoline), E85 needs more fuel per pound of air for optimum combustion; therefore E85 can not be used in conventional vehicles which are designed for no more than E10.

E85 contains about 69 - 74% of the energy of gasoline on a gallon basis. Therefore fuel economy (miles/gallon) on FFVs is substantially reduced when operated on E85. The extent of the decrease depends upon the reduction of heating value due to the presence of the ethanol in fuel, and the vehicle response. Analysis of the gasoline and E85 city/highway fuel economy ratings for the 33 model year 2006 FFVs indicates that the fuel economy penalty for E85 averages about 26% with a range between 24% and 34%.

Given the above cited average fuel economy penalty of 26% for a model year 2006 FFV operated on E85, this means that on a cents/mile basis, the retail price of a gallon of E85 would have to be at least 60 cents less than the current average retail price of gasoline in order for the fuel operating costs on E85 to be comparable with those on gasoline.

An embodiment presented herein provides volatility agents for use in improving the cold start performance of engines combusting alcohol-containing fuels, including but not limited to ethanol blends such as E100, E85, E50, and the like down to E10 and trace blends of ethanol or blends of propanol and/or butanol in gasoline or other hydrocarbons.

Another embodiment provides a method of improving the cold start performance of an engine combusting a fuel composition containing a hydrocarbon and or gasoline and an alcohol such as ethanol, said method comprising combining the fuel and an additive selected from the group consisting of volatility enhancing materials.

It is to be understood that both the foregoing general description and the following detailed description are exemplary and explanatory only and are intended to provide further explanation of the present disclosure, as claimed.

By "volatility agent" herein is meant any fuel soluble and combustible component or additive that can be shown to partition differentially such that its presence is enriched in the combustion chamber during starting or other operations requiring a higher concentration of ignitable material to provide improved startability.

Accordingly, in one example herein is provided a fuel composition comprising, or in another embodiment consisting essentially of, gasoline, ethanol and at least one volatility agent, said volatility agent being selected from the group consisting of methyloxirane and other oxiranes, peroxides, alkyl nitrates, C1-C8 aliphatic hydrocarbons, ketones, butylene oxides, propylene oxides, ethylene oxides, epoxides, butane, pentane, nitrous oxide, nitromethane, xylene, diethyl ether, monoesters, diesters, ethers, diethers, polyethers, glymes, and glycols. In another embodiment, the fuel composition is free of or essentially free of gasoline, except for any gasoline or gasoline component used as the denaturant for the ethanol.

In another example is provided a fuel composition comprising an alcohol and a hydrocarbon volatility agent and optionally a hydrocarbon component. In yet another embodiment the alcohol is selected from the group consisting of ethanol, propanol, butanol and blends thereof. In a further embodiment the volatility agent has a Reid Vapor Pressure greater than 7.0. Still another example provides a fuel composition with an alcohol and a hydrocarbon volatility agent wherein the alcohol is ethanol and the hydrocarbon is a gasoline having a Reid vapor pressure greater than 7.0. In another example the alcohol is ethanol, the volatility agent is butane and the hydrocarbon component is gasoline.

The fuel compositions disclosed herein can further comprises a fuel additive selected from the group consisting of lubricity additives, combustion improvers, detergents, dispersants, cold flow improvers, dehazers, demulsifiers, cetane improvers, antioxidants, scavengers, and pollution suppressants.

In one embodiment, the ethanol content of the fuel composition is from about 74% to about 85%. In another embodiment of the disclosure herein the ethanol content of the fuel composition is from about 50% to about 74%.

Also provided herein is a method of improving the cold start performance of an engine combusting a fuel composition containing a hydrocarbon and an alcohol or mixture of alcohols, said method comprising combining the fuel and an additive selected from the group consisting of volatility enhancing materials that include monoesters, diesters, ketones, ethers, diethers, polyethers, glymes, and glycols, wherein the cold start of said engine is improved relative the cold start of the engine combusting a gasoline fuel without ethanol.

The present disclosure provides in one embodiment a fuel composition comprising ethanol and a hydrocarbon component with a Reid Vapor Pressure of greater than 7.0. In another embodiment the hydrocarbon component is a volatility agent. In yet another embodiment the fuel composition is essentially free of gasoline.

The formulation and methods presently disclosed will improve the cold start performance of engines combusting the fuel compositions described herein. Cold start performance is directly related to volatility of the fuel and/or the volatility of at least one combustible component thereof. Thus, cold start, as measured by the time required to achieve positive torque or disengaging the starter motor, can be evaluated to show enhanced performance in engines combusting fuel containing gasoline and 10% to about 90% of an alcohol, such as but not limited to ethanol, plus at least one of the volatility additives described herein. These additives can also provide enhanced performance after cold start by improving volatility or partition of combustible components into the combustion chamber during normal vehicle operation. Many of the volatility agents disclosed herein have been utilized in gasoline to achieve other benefits, but it is not known to the present inventors that these materials have been used in gasoline/ethanol blended fuels for their volatility attributes.

The volatility agents described herein can be useful in the range of from about 0.1 to about 15.0 weight percent of the finished fuel formulation.

The present disclosure also provides a volatility agent for ethanol, propanol and butanol or combinations of these alcohols or ethanol-gasoline, propanol- gasoline, and butanol-gasoline blends or blends of these alcohol-gasoline combinations where the agent is selected from the group consisting of one or more C1-C8 aliphatic hydrocarbon components, such as methane, ethane, propane, butane, isobutane, pentane, isopentane, hexane, heptane and octane and isomers thereof and mixtures thereof.

In another embodiment is provided a fuel composition comprising ethanol, gasoline and up to about 15% by weight pentane, or in another embodiment 10% by weight pentane, and in yet another embodiment 5% by weight pentane.

The following examples further illustrate aspects of the present disclosure but do not limit the present disclosure.

### EXAMPLES:

### Example 1 Cold Start for Gasoline, Ethanol and Dimethyl Ether

A fuel formulation can be prepared by blending commercial gasoline and ethanol (which by U.S. law will contain a denaturant, often gasoline or kerosene) in a ratio to achieve 85% ethanol (aka E85). To this fuel blend can be added 1.0% by weight of dimethyl ether as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of gasoline and ethanol but without the volatility agent. By this method the cold start performance of the engine is improved.

### Example 2 Cold Start for Gasoline, Ethanol and Butane

A fuel formulation can be prepared by blending commercial gasoline and ethanol in a ratio to achieve 85% ethanol (aka E85). To this fuel blend can be added 3.0% by weight of isobutane as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of gasoline and ethanol but without the volatility agent. By this method the cold start performance of the engine is improved.

### Example 3 Cold Start for Gasoline, Ethanol and Petroleum Ether

A fuel formulation can be prepared by blending commercial gasoline and ethanol in a ratio to achieve 85% ethanol (aka E85). To this fuel blend can be added 10.0% by weight of petroleum ether as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of gasoline and ethanol but without the volatility agent. By this method the cold start performance of the engine is improved.

### Example 4 Cold Start for Gasoline, Ethanol and Nitrous Oxide

A fuel formulation can be prepared by blending commercial gasoline and ethanol in a ratio to achieve 85% ethanol (aka E85). To this fuel blend can be added 5.0% by weight of nitrous oxide as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of gasoline and ethanol but without the volatility agent. By this method the cold start performance of the engine is improved.

### Example 5 Cold Start for Gasoline, Ethanol and Nitromethane

A fuel formulation can be prepared by blending commercial gasoline and ethanol in a ratio to achieve 85% ethanol (aka E85). To this fuel blend can be added 10.0% by weight of nitromethane as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of gasoline and ethanol but without the volatility agent. By this method the cold start performance of the engine is improved.

### Example 6 Cold Start for Ethanol (E100) and Nitrous Oxide

To an E100 fuel can be added 8.0% by weight of nitrous oxide as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of ethanol but without the volatility agent. By this method the cold start performance of the engine is improved.

### Example 7 Cold Start for Ethanol (E100) and Dimethyl Ether

To an E100 fuel can be added 4.0% by weight of dimethyl ether as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of ethanol but without the volatility agent. By this method the cold start performance of the engine is improved.

### Example 8 Cold Start for Ethanol (E100) and Butane

To an E100 fuel can be added 15.0% by weight of isobutane as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of ethanol but without the volatility agent. By this method the cold start performance of the engine is improved.

### Example 9 Cold Start for Ethanol (E100) and Petroleum Ether

To an E100 fuel can be added 1.0% by weight of petroleum ether as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of ethanol but without the volatility agent. By this method the cold start performance of the engine is improved.

### Example 10 Cold Start for Ethanol (E100) and Nitromethane

To an E100 fuel can be added 10.0% by weight of nitromethane as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of ethanol but without the volatility agent. By this method the cold start performance of the engine is improved.

### Example 11 Cold Start for Gasoline, Butanol and Butane

A fuel formulation can be prepared by blending commercial gasoline and butanol in a ratio to achieve 85% alcohol. To this fuel blend can be added 5.0% by weight of butane as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of gasoline and ethanol but without the volatility agent. By this method the cold start performance of the engine is improved.

### Example 12 Cold Start for Gasoline, Butanol and Nitrous Oxide

A fuel formulation can be prepared by blending commercial gasoline and butanol in a ratio to achieve 85% alcohol. To this fuel blend can be added 5.0% by weight of nitrous oxide as a volatility agent. The fuel can then be supplied to an internal combustion engine (spark ignited or compression ignited) and combusted in the engine. The volatility agent will decrease the time needed to achieve positive torque or disengaging the starter motor in the engine relative to the time needed to achieve positive torque or disengaging the starter motor in the same engine when combusting a comparable fuel of gasoline and ethanol but without the volatility agent. By this method the cold start performance of the engine is improved.

Volatility agents can be used herein to blend with an alcohol fuel, such as but not limited to E85 to adjust the vapor pressure and thus improve the fuel properties and the engine performance. Examples of such volatility agents, including ethers and alkanes, are listed in Table 1.

**TABLE 1**

| | **Vapor Pressure** |
|---|---|
| **Ethanol Blend** | **at 77 F mmHg** |
| | |
| E100 | 59.02 |
| E75 | 250.60 |
| +4% pentane | 256.60 |
| +8% pentane | 262.60 |
| +10% pentane | 265.60 |
| | |
| E85 | 188.14 |
| | |
| +0.1% Pentane | 188.25 |
| +0.5% Pentane | 188.68 |
| +1% Pentane | 189.23 |
| +4% Pentane | 192.47 |
| +8% Pentane | 196.77 |
| +10% Pentane | 198.90 |
| | |
| +0.1% Butane | 188.87 |
| +0.5% Butane | 191.77 |
| +1% Butane | 195.38 |
| +4% Butane | 217.00 |
| +8% Butane | 245.70 |
| +10% Butane | 260.00 |
| | |
| +4% diethyl ether | 188.05 |
| +8% diethyl ether | 187.95 |
| +10% diethyl ether | 187.89 |
| | |
| +0.1% dimethyl ether | 189.13 |
| +0.5% dimethyl ether | 193.07 |
| +1% dimethyl ether | 197.99 |
| +4% dimethyl ether | 227.40 |
| +8% dimethyl ether | 266.30 |
| +10% dimethyl ether | 285.70 |

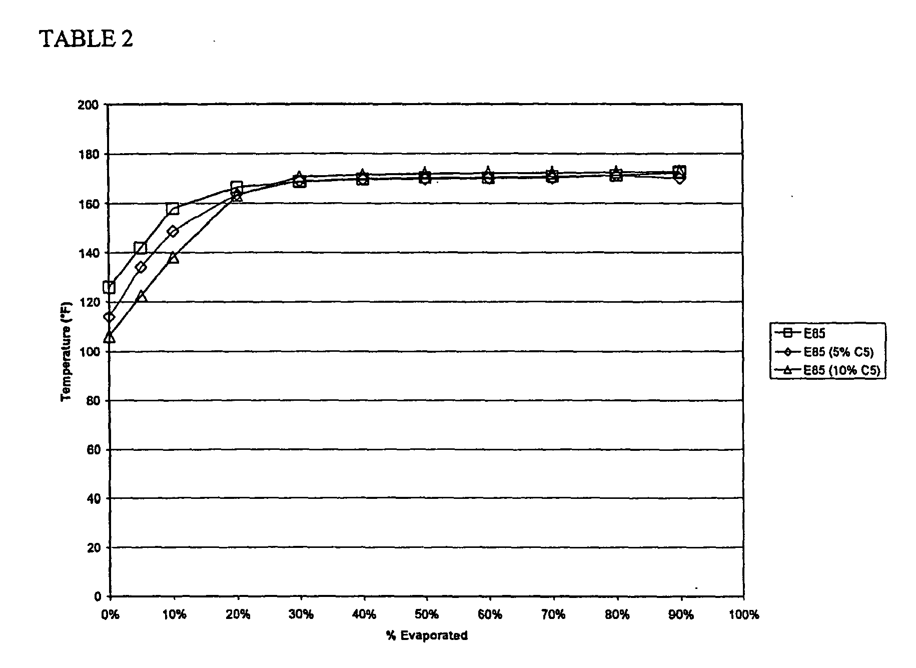

Table 2 is a graph of the results from ASTM D86 test which shows the percent of fuel blend that is evaporated at various temperatures. A fuel blend in a beaker is evaporated and the percentage is measured at each temperature. To achieve better or improved low temperature start or ignition in an engine, one desires a higher percentage of evaporation at constant temperature, or a lower temperature of equivalent evaporation. Thus, Table 2 shows that the E85 blend began its evaporation at 126°F., while the E85 blend with 5 weight percent pentane (C5) had initial evaporation at 114°F. The E85 blend containing 10 weight percent pentane (C5) had evaporation at 106°F., a significant reduction of temperature and improvement in cold start performance. The raw data is presented in Table 4 and shows that the temperatures to achieve 10% evaporation for E85, E85 + 5% C5 and E-85 + 10% C5 were, respectively, 150°F., 148.9°F. and 138.2°F.

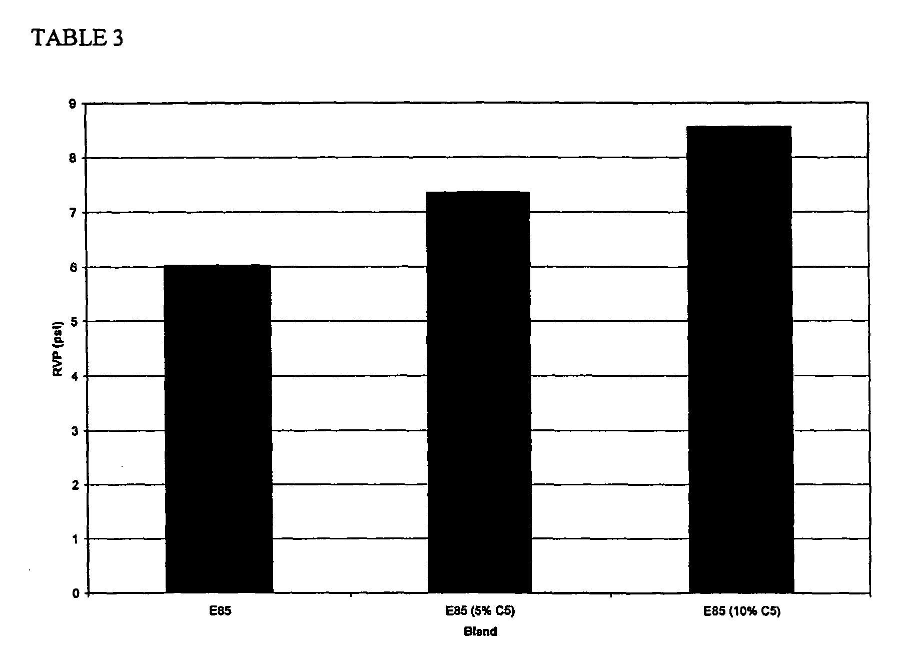

Table 3 shows vapor pressure measurements above a fuel according to ASTM D5191. It is readily apparent that the E85 + 10% C5 had an RVP of 8.56, while the E85 + 5% C5 has an RVP of 7.36, and the E85 without a volatility agent had an RVP of 6.03. By the present invention, fuel blends with RVP above 7.0 are possible.

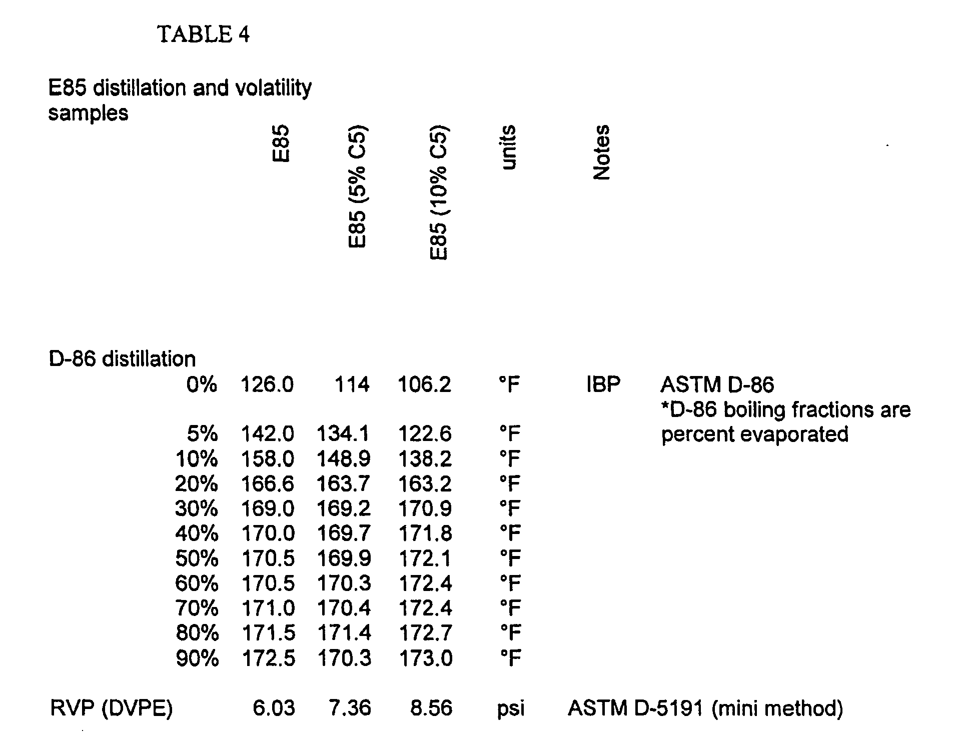

Other embodiments of the present disclosure will be apparent to those skilled in the art from consideration of the specification and practice of the disclosure disclosed herein. As used throughout the specification and claims, "a" and/or "an" may refer to one or more than one. Unless otherwise indicated, all numbers expressing quantities of ingredients, properties such as molecular weight, percent, ratio, reaction conditions, and so forth used in the specification and claims are to be understood as being modified in all instances by the term "about." Accordingly, unless indicated to the contrary, the numerical parameters set forth in the specification and claims are approximations that may vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. It is intended that the specification and examples be considered as exemplary only, with a true scope and spirit of the disclosure being indicated by the following claims.

## Claims

1. A fuel composition comprising an alcohol and a hydrocarbon volatility agent and optionally a hydrocarbon component.

2. A fuel composition consisting essentially of gasoline, an alcohol, and at least one hydrocarbon volatility agent and optionally a hydrocarbon component.

3. The fuel composition of claim 1 or 2, wherein the alcohol is selected from the group consisting of ethanol, propanol, butanol and blends thereof.

4. The fuel composition of any one of the preceding claims, wherein the volatility agent has a Reid Vapor Pressure greater than 7.0.

5. The fuel composition of any one of the preceding claims, wherein the alcohol is ethanol and the hydrocarbon is a gasoline having a Reid Vapor Pressure greater than 7.0.

6. The fuel composition of any one of the preceding claims, wherein the alcohol is ethanol, the volatility agent is butane and the hydrocarbon component is gasoline.

7. The fuel in any one of claims 1 to 5 wherein the alcohol is ethanol, the volatility agent is dimethyl ether and the hydrocarbon component is selected from the group consisting of gasoline, natural gasoline, naphtha, or gasoline components.

8. A fuel composition comprising gasoline, ethanol, and at least one volatility agent, said volatility agent being selected from the group consisting of methyloxirane, oxiranes, peroxides, alkyl nitrates, C1-C8 aliphatic hydrocarbons, ketones, butylenes oxides, propylene oxides, ethylene oxides, epoxides, butane, pentane, nitrous oxide, nitromethane, xylene, diethyl ether, monoesters, diesters, ethers, glymes, and glycols.

9. A fuel composition consisting essentially of gasoline, ethanol and at least one volatility agent, said volatility agent being selected from the group consisting of methyloxirane, oxiranes, peroxides, alkyl nitrates, C1-C8 aliphatic hydrocarbons, ketones, butylenes oxides, propylene oxides, ethylene oxides, epoxides, butane, pentane, nitrous oxide, nitromethane, xylene, diethyl ether, monoesters, diesters, ethers, glymes, and glycols.

10. The composition of claim 8 or 9, wherein the ethanol content of the fuel composition is from about 74% to about 85%.

11. The composition of claim 8 or 9, wherein the ethanol content of the fuel composition is from abou 50% to about 74%.

12. A method of improving the cold start performance of an engine combusting a fuel composition containing gasoline and ethanol, said method comprising combining the fuel and at least one volatility additive selected from the group consisting of methyloxirane, oxiranes, peroxides, alkyl nitrates, C1-C8 aliphatric hydrocarbons, ketones, butylenes oxides, propylene oxides, ethylene oxides, epoxides, butane, pentane, nitrous oxide, nitromethane, xylene, diethyl ether, monoesters, diesters, ethers, glymes, and glycols, wherein the cold start of said engine is improved relative the cold start of the engine combusting a fuel containing gasoline and ethanol without the at least one volatility additive.

13. The fuel composition of any one of claims 1 to 11 wherein the composition further comprises a fuel additive selected from the group consisting of lubricity additives, combustion improvers, detergents, dispersants, cold flow improvers, dehazers, demulsifiers, cetane improvers, antioxidants, scavengers, and pollution suppressants.
